# EUROPÄISCHE PATENTSCHRIFT

(11) **EP 0 743 504 B1**
(45) Veröffentlichungstag und Bekanntmachung des Hinweises auf die Patenterteilung: **20.03.2002**
(21) Anmeldenummer: 96890068.8
(22) Anmeldetag: 11.04.1996
(51) Int. Cl.: G01B 11/04

(54) **Einrichtung zum Erfassen der Masse eines bewegten Gegenstandes**
Device to access the size of a moving object
Dispositif pour déterminer les mesures d'objets en mouvement

(30) Priorität: 18.05.1995 AT 84195
(43) Veröffentlichungstag der Anmeldung: 20.11.1996
(73) Patentinhaber: ALSTOM Austria AG, A-4020 Linz (AT)
(72) Erfinder: Wögerbauer, Johann Peter, 4040 Linz (AT)
(74) Vertreter: Rossboth, Werner Heinz

(56) Entgegenhaltungen:
- WO-A-94/24515
- WO-A-94/27166
- DE-A- 1 623 316
- US-A- 4 201 476

## Beschreibung

Die Erfindung bezieht sich auf eine Einrichtung zum Erfassen der Maße eines bewegten Gegenstandes, insbesondere der Längen- und/oder Breitenmaße eines Brettes, mit einem quer zur Bewegungsrichtung des Gegenstandes stehenden Meßtor, an dem eine optoelektronische Meßeinrichtung mit einem im Brennpunkt eines Parabolreflektors befindlichen Drehspiegel, auf den ein von einem Laser erzeugter komprimierter Lichtstrahl gerichtet ist, und eine Auswerte-Einheit befestigt sind, wobei der Gegenstand seitlich entlang eines Lineals bewegt wird.

Bei bekannten Einrichtungen zur Längenerfassung von Brettern erfolgt die Bewegung der Bretter meist quer zur Längsachse, im sogenannten Quertransport. Die Bretter oder Pfosten liegen auf Gleitschienen und werden mittels Förderketten mit Mitnehmerhaken seitlich entlang eines Lineals vorwärtsbewegt. Damit die Bretter oder Pfosten seitlich immer am Lineal anliegen, sind in bestimmten Abständen quer zur Bewegungsrichtung liegende Förderschnecken angeordnet, die eine Versetzung zum Lineal, quer zur Bewegungsrichtung, bewirken.

Die Längenerfassung erfolgt bei diesen Einrichtungen entweder mit einfachen Endschaltem, sogenannten Peitschenschaltern, mit Fahnen, die von den Brettern während ihrer Bewegung niedergedrückt werden und Signale auslösen, oder mit in einem Lichtvorhang angeordneten Lichtschranken. Bei beiden Ausführungen ist die Anzahl der vom Brett betätigten Peitschenschalter oder der unterbrochenen Lichtschranken ein Maß für die Brettlänge. Die Meßgenauigkeit hängt vom Abstand der Peitschenschalter oder Lichtschranken zueinander ab. Durch die hohe mechanische Beanspruchung der Peitschenschalter besteht die Gefahr von Störungen. Bei der relativ aufwendigen Ausführung mit Lichtschranken müssen entweder die Lichtsender oder die Lichtempfänger unterhalb der bewegten Bretter angeordnet sein. Dieser Bereich ist jedoch durch Späne und Öl starker Verschmutzung ausgesetzt.

Aus der optoelektronischen Rundholzvermessung im Längsdurchlauf sind Durchmessermeßeinrichtungen bekannt, die zur Parallelstrahlabtastung des Meßgegenstandes Parabolspiegel verwenden, in dessen Brennpunkten rotierende Spiegel angeordnet sind, auf die jeweils über eine Optik ein von einer Lampe erzeugter Lichtstrahl gerichtet ist.
In der DD-PS 141 861 ist eine optoelektronische Rundholzmessung beschrieben, bei welcher anstatt der Lampe und Optik ein monochromatischer Laser verwendet wird, dessen fokussierter Lichtstrahl auf den rotierenden Spiegel ausgerichtet ist.

Die US-A-4201476 beschreibt eine Messung der Maße eines bewegten Gegenstandes, bei der ein Laserstrahl von einem im Brennpunkt eines Parabolspiegels angeordneten Drehspiegel über den Parabolspiegel auf einen Bereich, worin sich der Gegenstand befindet, gerichtet wird. Auf diese Weise wird der ganze Bereich abgetastet. Strahlen die auf dem Gegenstand treffen erreichen den vorhandenen Detektor nicht, aber Strahlen die nicht auf dem Gegenstand treffen werden von einem Retroreflektor reflektiert und dann detektiert. Die auf diese Weise entstandene Dunkelzone entspricht dem Gegenstand und wird zur Bestimmung dessen Abmessung angewendet.

Durch die in der Folge aufgezeigte erfindungsgemäße Ausführung wird eine Einrichtung der eingangs genannten Art bezweckt, bei welcher die vorangeführten Nachteile vermieden werden können und die auf wirtschaftliche Art berührungslos die exakte Erfassung der Maße bewegter Gegenstände mit hoher Genauigkeit und Zuverlässigkeit ermöglicht.

Dies wird insbesondere dadurch erreicht, daß der Laser aus einem von einem Oszillator gepulsten Halbleiterlaser besteht und in der optoelektronischen Meßeinrichtung Empfangselemente vorgesehen sind, welche in einer zu Auflageebene des bewegten Gegenstandes parallelen Ebene, vorzugsweise unterhalb des Parabolreflektors, liegen und deren lichtempfindliche Flächen dem bewegten Gegenstand zugewandt sind.
Die vom Halbleiterlaser ausgesendeten komprimierten Lichtimpulse werden vom Drehspiegel auf dem Parabolreflektor gelenkt und treffen senkrecht auf der Oberfläche des zu vermessenden Gegenstandes auf, so daß sich entlang des Gegenstandes nacheinander Linien von Lichtpunkten bilden. Nach dem Auftreffen von der Oberfläche des Gegenstandes reflektiertes Licht wird von den Empfangselementen detektiert und in der Auswerte-Einheit weiterverarbeitet. Je nach Länge des Gegenstandes ist eine bestimmte Anzahl von Lichtimpulsen aufgetroffen und hat Licht reflektiert.
Durch die Geometrie der erfindungsgemäßen Einrichtung, fester Abstand zum Lineal und Länge des Parabolreflektors, kann die Auswerte-Einheit aus der Zahl der detektierten Lichtimpulse pro Abtastzyklus die Länge des bewegten Gegenstandes ermitteln. Aus der Meßzeitsumme aller Abtastzyklen und Bewegungsgeschwindigkeit des Gegenstandes ergibt sich dessen Breite. Bevorzugterweise ist an einem Ende des Parabolreflektors eine auf den Drehspiegel gerichtete Photodiode angeordnet.
Trifft ein Lichtimpuls auf der Photodiode auf, bewirkt dessen Signal den Start des Oszillators, womit ein fester Bezug der Stellung des Drehspiegels zum Längenwert des Abtastzyklusses sichergestellt ist.
Zwischen Umdrehung des Drehspielgels und der Oszillatorfrequenz kann eine feste Beziehung bestehen, wodurch die vom Halbleiterlaser erzeugten Lichtimpulse exakten Winkelschritten entsprechen.
Bei einer bevorzugten Ausführung besteht die Auswerte-Einheit aus einem Mikroprozessor, der ausgebildet ist, um aus der Zahl der vom bewegten Gegenstand reflektierten Lichtimpulse pro Abtastzyklus und der Lage des Lineals die Länge des Gegenstandes und aus der Meßzeitsumme aller Abtastzyklen und der Bewegungsgeschwindigkeit des Gegenstandes dessen Breite zu ermitteln.
Durch Mikroprozessoren mit Plausibilitätsalgorithmen können Fehlmessungen praktisch ausgeschlossen werden. Bedingt durch die Bewegung des Gegenstandes verlaufen die Lichtpunktlinien der einzelnen Abtastzyklen nicht parallel zur Längsachse des Gegenstandes. Abtastzyklen, deren Lichtpunktlinie eine der beiden parallelen Längsseiten des Gegenstandes schneiden, werden auf Grund dieser Plausibilitätsalgorithmen unterdrückt, dh nicht für die Längenbestimmung herangezogen.

Zum Erfassen der Maße langer Bretter können mehrere gleichförmige optoelektronische Meßeinrichtungen versetzt aneinander gereiht am quer zur Bewegungsrichtung des Gegenstandes stehenden Meßtor befestigt sein.

Eine besonders einfach justierbare und wartungsfreundliche Ausführung wird erreicht, wenn der gepulste Halbleiterlaser aus einer Einheit mit Laserdiode, Drei-Linsen-Kollimator und Treiberelektronik besteht, die komprimierte Lichtimpulse mit einer Wellenlänge von etwa 670 nm aussendet.
Durch den sichtbaren roten Laserstrahl kann die Ausrichtung des Halbleiterlasers und des Drehspiegels auf einfachste Art visuell ohne zusätzliche Meßgeräte vorgenommen werden.

Bevorzugterweise bestehen die Empfangselemente aus Photodioden mit Intrinsieschicht (PIN) und integrierter Verstärkerelektronik, es können aber auch Phototransistoren vorgesehen sein.

In einer bevorzugten Ausführungsform sind Parabolreflektoren, Drehspiegel, Halbleiterlaser, Empfangselemente und Photodioden in einem dichten Gehäuse untergebracht, das in der dem Gegenstand zugewandten Seite einen von einem Glas abgedeckten Längsschlitz aufweist.
Die optoelektronische Meßeinrichtung ist dadurch gegen äußere Einflüsse und Fremdlicht geschützt.

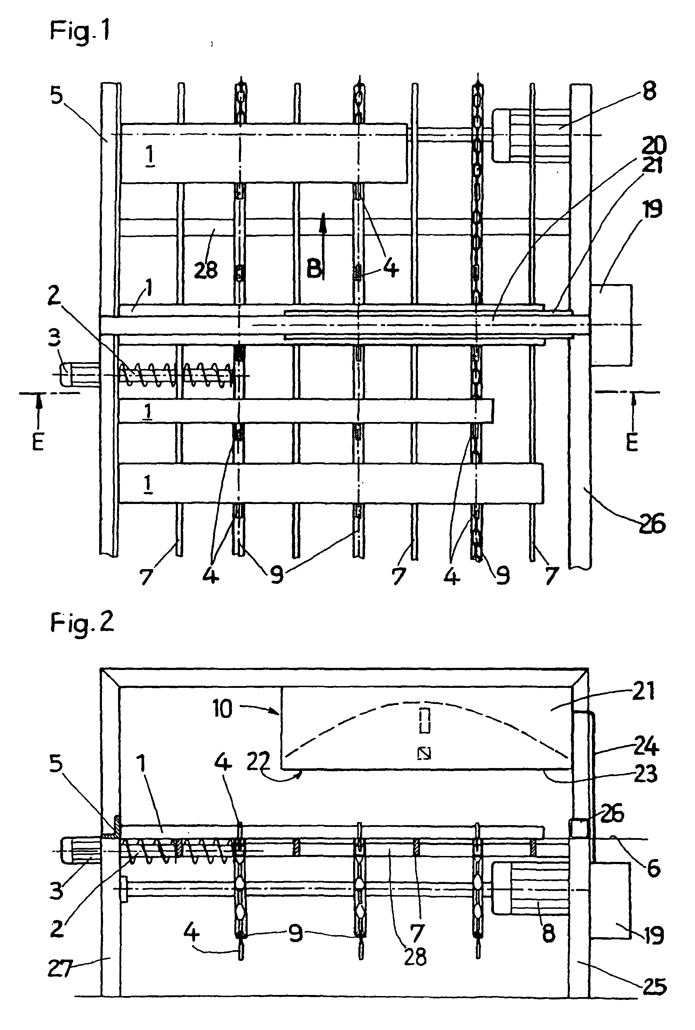

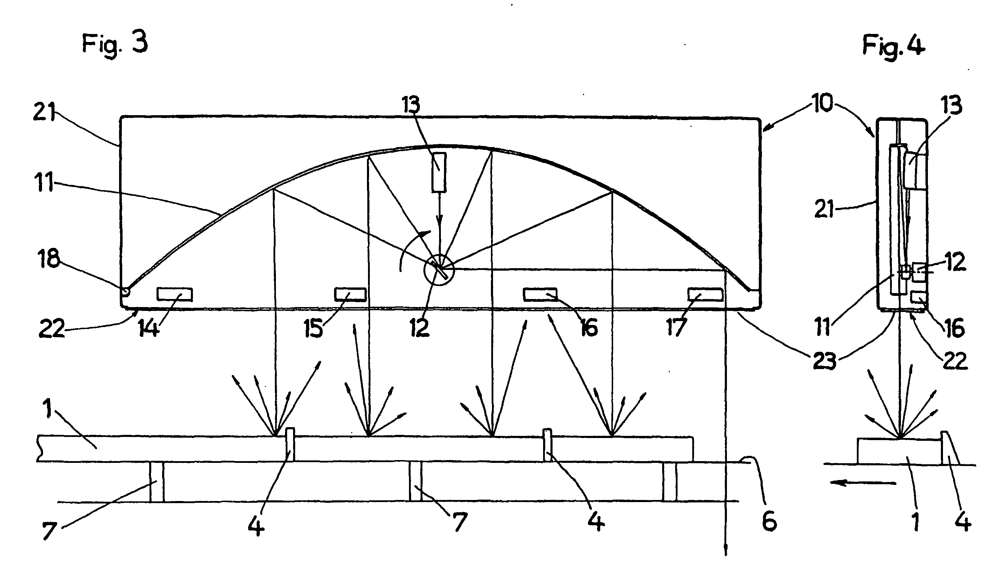

Im folgenden wird an Hand der beiliegenden Zeichnung ein Ausführungsbeispiel des Erfindungsgegenstandes näher erläutert. Es zeigen Fig. 1 den Grundriß einer erfindungsgemäßen Einrichtung, Fig. 2 die Schnittdarstellung der Einrichtung gemäß der Linie E-E in Fig. 1, Fig. 3 den Aufriß und Fig. 4 die Seitenansicht der optoelektronischen Meßeinrichtung in vergrößerter Darstellung.

In Fig. 1 ist schematisch ein Kettenförderer gezeichnet, auf welchem Pfosten und Bretter 1 aus Holz quer in Richtung des Pfeiles B transportiert werden. Die Pfosten oder Bretter 1 liegen auf Gleitschienen 7 und werden mittels Förderketten 9 mit Mitnehmerhaken 4 seitlich entlang eines Lineals 5 vorwärtsbewegt. Damit die Pfosten oder Bretter 1 an ihrer linken Seite immer am Lineal 5 anliegen, sind in bestimmten Abständen parallel zu den Längsachsen der Pfosten oder Bretter 1 liegende Förderschnecken 2 angeordnet. Die von einem Elektromotor 3 angetriebenen Förderschnecken 2 bewirken eine Versetzung der Bretter 1 zum Lineal 5 hin.

Die mit den Mitnehmerhaken 4 fest verbundenen, auf Gliedern bestehenden Förderketten 9 laufen unter der Auflageebene 6 (Fig. 2) in Profilschienen und über Kettenräder, die von einem Motor 8 angetrieben werden.

Der Kettenförderer dient zum Transport von Pfosten und Brettern 1 unterschiedlicher Länge und Breite, um diese anschließend sortiert zu gleichartigen Paketen stapeln zu können.

Zu diesem Zweck schließt an den in Fig. 1 dargestellten Kettenförderer ein nicht gezeichnetes Fördersystem an, das die Pfosten oder Bretter 1 im Längstransport zu einem für ihre Länge und Breite vorgesehenen Lagerfach transportiert.

Damit keine Vibrationen auftreten, ist der Kettenförderer mittels der fest verankerten Steher 25, 27 und den miteinander fest verbundenen Teilen, Lineal 5, Längsprofil 26 und Querträger 28, stabil aufgebaut.

Zum Erfassen der Längen- und Breitenmaße der transportierten Pfosten oder Bretter 1 ist ein mit dem Steher 27 und dem Längsprofil 26 fest verbundenes Meßtor 20 ausgebildet, an dem ein die optoelektronische Meßeinrichtung 10 beinhaltendes Gehäuse 21 montiert ist.

Das Gehäuse 21 weist an seiner den Brettern 1 zugewandten Seite 22 einem von einem Glas abgedeckten Längsschlitz 23 auf.

Über das Kabel 24 ist die optoelektronische Meßeinrichtung 10 elektrisch mit der Auswerte-Einheit 19 verbunden, die bei dieser Ausführungsform am Steher 25, nicht am Meßtor 20, befestigt ist.

Aus Fig. 3 und 4 ist ersichtlich, aus welchen Elementen die optoelektronische Meßeinrichtung 10 aufgebaut ist. Zur Verdeutlichung ist in beiden Fig. des Gehäuse 21 im Schnitt dargestellt.

Im Brennpunkt des schmalen Parabolreflektors 11 ist ein elektrisch angetriebener Drehspiegel 12 stoßsicher aufgehängt, welcher einmal einjustiert mit dem Halbleiterlaser 13 und dem Parabolreflektor 11 eine unveränderliche optische Einheit bildet. Am linken Ende des Parabolreflektors 11 ist eine auf dem Drehspiegel 12 gerichtete Photodiode 18 angeordnet.

Der Halbleiterlaser 13 besteht aus einer Einheit mit Laserdiode, Drei-Unsen-Kollimator sowie Treiberelektronik und wird von einem Oszillator gepulst, so daß er komprimierte Lichtimpulse mit einer Wellenlänge von etwa 670 nm aussendet.

Damit zwischen Umdrehung des Drehspiegels 12 und der Oszillatorfrequenz eine feste Beziehung besteht, ist eine Regelelektronik vorgesehen.

Trifft ein Lichtimpuls auf der Photodiode 18 auf, bewirkt dessen Signal den Start des Oszillators, womit ein fester Bezug der Stellung des Drehspiegel 12 zum Längenwert des Brettes 1 sichergestellt ist.
Der Oszillator liefert beispielsweise eine Impulsmenge von 500 pro Abtastzyklus. Vom Halbleiterlaser 13 ausgesendete Lichtimpulse gelangen somit über den Drehspiegel 12 in 500 festen Winkelschritten auf den Parabolreflektor 11, werden von diesem reflektiert und treffen senkrecht auf der Oberfläche des Brettes 1 auf, so daß sich entlang des Brettes 1 nacheinander eine Linie von Lichtpunkten pro Abtastzyklus und insgesamt eine zeilenförmige Abtastung (Scannung) ergibt.

Auf Grund der Ablenkung der Lichtimpulse durch den Parabolreflektor 11 ergeben die konstanten Winkelschritte des Drehspiegels 12 keinen linearen Weg der Lichtpunkte auf dem Brett 1.

Durch einen programmierten Algorithmus oder eine eingespeicherte Tabelle, kann in der Auswerte-Einheit 19 diese Nichtlinearität jedoch in echte Wegwerte umgesetzt werden. Durch Plausibilitätsalgorithmen werden außerdem nur vollständige Wegwerte zur Längenermittlung verwertet. Abtastzyklen, deren Lichtpunktlinie eine der beiden parallelen Längsseiten des Brettes 1 schneiden, werden unterdrückt.

Im Gehäuse 21 sind oberhalb des Längsschlitzes 23 in gleichen Abständen zueinander vier Empfangselemente 14 ... 17 angeordnet, deren lichtempfindliche Flächen dem Brett 1 zugewandt sind.
Es versteht sich, daß der Gang der vom Parabolreflektor 11 kommenden Lichtimpulse durch die Empfangselemente 14 ... 17 nicht gestört ist.

Als Empfangselemente 14 ... 17 sind Photodioden (PIN) mit oder ohne Verstärkerelektronik geeignet.
Treffen Lichtimpulse auf einem Brett 1 auf, entstehen Reflektionen, die von wenigstens einem Empfangselement 14 ... 17 detektiert werden. Die detektierten Lichtpunkte pro Abtastzyklus werden in der Auswerte-Einheit 19 gezählt und weiterverarbeitet. Je nach Länge des Brettes 1 ist eine bestimmte Anzahl von Lichtimpulsen aufgetroffen und hat Licht reflektiert.
Durch die Geometrie der Einrichtung, fester Abstand der optoelektronischen Meßeinrichtung 10 zum Lineal 5 und Länge des Parabolreflektors 11, kann die Auswerte-Einheit 19 aus der Zahl der detektierten Lichtimpulse exakt die Länge des bewegten Brettes 1 ermitteln.

Aus der Meßzeit, d.h. Zeit zwischen dem Auftreffen des ersten Lichtimpulses des ersten Abtastzyklusses und letzten Lichtimpulses des letzten Abtastzyklusses auf dem Brett 1 und der Bewegungsgeschwindigkeit des Brettes 1, ist dessen Breite in der Auswerte-Einheit 19 errechenbar. Eine Überwachung der Aufnahme der Geschwindigkeit des Kettenförderers kann auf einfache Art über einen gekoppelten Impulsgeber erfolgen. Die Genauigkeit der Breitenbestimmung ergibt sich aus dem Weg, den das Brett 1 zwischen zwei Abtastzyklen zurücklegt.
Reicht diese Genauigkeit nicht aus, kann am Meßtor 20 zusätzlich eine optoelektronische Meßeinrichtung 10 parallel zum Lineal 5 angeordnet sein.

Die aus Mikroprozessor mit Zeit- und Speicher-Einheit bestehende Auswerte-Einheit 19 ist so ausgerüstet bzw. programmiert, daß die erforderlichen Rechenvorgänge aus den gespeicherten Signalen ausgeführt und gemeldet werden können und der weitere Anschluß von Störungsmeldungen oder aber auch übergeordneter Rechner möglich wird.

Damit eine automatische Sortierung und Einlagerung der Pfosten oder Bretter 1 nach ihrer Länge und Breite realisierbar wird, kann die Auswerte-Einheit 19 mit der Steuerung des an den Kettenförderer anschließenden Fördersystems gekoppelt sein, das die Pfosten oder Bretter 1 zu einem vorgesehenen Lagerfach weitertransportiert.

Die optoelektronische Meßeinrichtung 10 wird bevorzugterweise für einen Scannerbereich von einem Meter hergestellt. Bei Meßdistanzen, die über einen Meter hinausreichen, können am Meßtor 20 mehrere gleichförmige optoelektronische Meßeinrichtungen 10 versetzt aneinandergereiht befestigt sein, so daß sich der Scannerbereich vervielfacht.

Die Anwendung der Einrichtung ist nicht auf Kettenförderer zur Bewegung von Pfosten oder Brettern 1 im Quertransport beschränkt, sondern auch bei Fördersystemen für den Längstransport möglich, sofern die Pfosten oder Bretter 1 auf einer Auflageebene 6 entlang eines Lineals 5 bewegt werden.

## Patentansprüche

1. Einrichtung zum Erfassen der Maße eines bewegbaren Gegenstandes (1), insbesondere der Längen- und/oder Breitenmaße eines Brettes (1), mit einem Meßtor (20), an dem eine optoelektronische Meßeinrichtung (10) mit einem im Brennpunkt eines Parabolreflektors (11) befindlichen Drehspiegel (12), auf den ein von einem Laser (13), erzeugter komprimierter Lichtstrahl gerichtet ist, und eine Auswerte-Einheit (19) befestigt sind, wobei der Gegenstand (1) seitlich entlang eines quer zum Meßtor angeordneten Lineals (5) bewegbar ist **dadurch gekennzeichnet, daß** der Laser aus einem von einem Oszillator gepulsten Halbleiterlaser (13) besteht und in der optoelektronischen Meßeinrichtung (10) Empfangselemente (14 bis 17) vorgesehen sind, welche in einer zur Auflageebene (6) des bewegbaren Gegenstandes (1) parallelen Ebene, vorzugsweise unterhalb des Parabolreflektors (11), liegen und deren lichtempfindliche Flächen dem bewegbaren Gegenstand (1) zugewandt sind.

2. Einrichtung nach Anspruch 1, **dadurch gekennzeichnet, daß** an einem Ende des Parabolreflektors (11) eine auf den Drehspiegel (12) gerichtete Photodiode (18) angeordnet ist.

3. Einrichtung nach Anspruch 1 oder 2, **dadurch gekennzeichnet, daß** sie so ausgestattet ist, daß im Gebrauch zwischen Umdrehung des Drehspiegels (12) und der Oszillatorfrequenz eine feste Beziehung besteht.

4. Einrichtung nach einem der Ansprüche 1 bis 3, **dadurch gekennzeichnet, daß** die Auswerte-Einheit (19) aus einem Mikroprozessor besteht, der ausgebildet ist, um aus der Zahl der vom bewegbaren Gegenstand (1) reflektierten Lichtimpulse pro Abtastzyklus und der Lage des Lineals (5) die Länge des Gegenstandes (1) und aus der Meßzeitsumme aller Abtastzyklen und der Bewegungsgeschwindigkeit des Gegenstandes (1) dessen Breite zu ermitteln.

5. Einrichtung nach einem der Ansprüche 1 bis 4, **dadurch gekennzeichnet, daß** mehrere gleichförmige optoelektronische Meßeinrichtungen (10) versetzt aneinandergereiht am Meßtor (20) befestigt sind.

6. Einrichtung nach einem der Ansprüche 1 bis 5, **dadurch gekennzeichnet, daß** der gepulste Halbleiterlaser (13) aus einer Einheit mit Laserdiode, Drei-Linsen-Kollimator und Treiberelektronik besteht, die komprimierte Lichtimpulse mit einer Wellenlänge von etwa 670 nm aussendet.

7. Einrichtung nach einem der Ansprüche 1 bis 6, **dadurch gekennzeichnet, daß** die Empfangselemente (14 bis 17) aus Photodioden mit Intrinsicschicht (PIN) und integrierter Verstärkerelektronik bestehen.

8. Einrichtung nach einem der Ansprüche 1 bis 7, **dadurch gekennzeichnet, daß** Parabolreflektor (11), Drehspiegel (12), Halbleiterlaser (13), Empfangselemente (14 bis 18) und Photodiode (18) in einem dichten Gehäuse (21) untergebracht sind, das in der dem Gegenstand (1) zugewandten Seite (22) einen von einem Glas abgedeckten Längsschlitz (23) aufweist.

## Claims

1. Device for detecting the dimensions of a moveable object (1), in particular the length and/or width dimensions of a board (1), having a measuring gate (20) on which there is fastened an optoelectronic measuring device (10) with a rotary mirror (12) which is located at the focal point of a parabolic reflector (11) and to which a compressed light beam generated by a laser (13) is directed, and an evaluation unit (19), it being possible to move the object (1) laterally along a straight edge (5) arranged transverse to the measuring gate, **characterized in that** the laser consists of a semiconductor laser (13) pulsed by an oscillator, and there are provided in the optoelectronic measuring device (10) receiving elements (14 to 17) which lie in a plane parallel to the bearing plane (6) of the moveable object (1), preferably below the parabolic reflector (11), and whose light-sensitive surfaces face the moveable object (1).

2. Device according to Claim 1, **characterized in that** the photodiode (18) directed to the rotary mirror (12) is arranged at one end of the parabolic reflector (11).

3. Device according to Claim 1 or 2, **characterized in that** it is equipped such that in use there is a fixed relationship between turning of the rotary mirror (12) and the oscillator frequency.

4. Device according to one of Claims 1 to 3, **characterized in that** the evaluation unit (19) consists of a microprocessor which is designed in order to use the number of the light pulses per scanning cycle that are reflected by the moveable object (1) and the position of the straight edge (5) to determine the length of the object (1), and to use the total measuring time of all sampling cycles and the rate of movement of the object (1) to determine the width thereof.

5. Device according to one of Claims 1 to 4, **characterized in that** a plurality of uniform optoelectronic measuring devices (10) are fastened offset in a row on the measuring gate (20).

6. Device according to one of Claims 1 to 5, **characterized in that** the pulsed semiconductor laser (13) consists of a unit with a laser diode, a three-lens collimator and a driver electronic system, which emits compressed light pulses with a wavelength of approximately 670 nm.

7. Device according to one of Claims 1 to 6, **characterized in that** the receiving elements (14, to 17) consist of photodiodes with an intrinsic layer (PIN) and an integrated amplifying electronic system.

8. Device according to one of Claims 1 to 7, **characterized in that** the parabolic reflector (11), rotary mirror (12), semiconductor laser (13), receiving elements (14 to 18) and photodiode (18) are accommodated in an impervious housing (21) which has a longitudinal slot (23) covered by a glass in the side (22) facing the object (1).

## Revendications

1. Dispositif pour détecter les cotes d'un objet pouvant être déplacé (1), plus particulièrement les cotes de longueur et/ou de largeur d'une planche (1), comprenant un portillon de mesure (20) sur lequel sont fixés un dispositif de mesure optoélectronique (10) comprenant un miroir tournant (12), lequel se trouve dans le foyer d'un réflecteur parabolique (11) et sur lequel est dirigé un rayon lumineux comprimé généré par un laser (13), ainsi qu'une unité d'évaluation (19), l'objet (1) pouvant être déplacé latéralement le long d'une règle (5) disposée de manière transversale par rapport au portillon de mesure, **caractérisé en ce que** le laser se compose d'un laser à semiconducteur (13) pulsé par un oscillateur et que dans le dispositif de mesure optoélectronique (10) sont prévus des éléments récepteurs (14 à 17) qui se trouvent dans un plan parallèle au plan d'appui (6) de l'objet pouvant être déplacé (1), de préférence sous le réflecteur parabolique (11) et dont la surface photosensible est dirigée vers l'objet pouvant être déplacé (1).

2. Dispositif selon la revendication 1, **caractérisé en ce qu'**une photodiode (18) dirigée vers le miroir tournant (12) est disposé à l'une des extrémités du réflecteur parabolique (11).

3. Dispositif selon la revendication 1 ou 2, **caractérisé en ce qu'**il est équipé de telle manière qu'il existe en fonctionnement une relation fixe entre la vitesse de rotation du miroir tournant (12) et la fréquence de l'oscillateur.

4. Dispositif selon l'une des revendications 1 à 3, **caractérisé en ce que** l'unité d'évaluation (19) se compose d'un microprocesseur qui est configuré de manière à déterminer la longueur de l'objet (1) à partir du nombre d'impulsions lumineuses réfléchies par l'objet pouvant être déplacé (1) par cycle de scrutation et de la position de la règle (5) et sa largeur à partir de la somme des temps de mesure de tous les cycles de scrutation et de la vitesse de déplacement de l'objet (1).

5. Dispositif selon l'une des revendications 1 à 4, **caractérisé en ce que** plusieurs dispositifs de mesure optoélectroniques (10) de forme identique sont fixés sur le portillon de mesure (20) en étant décalés les uns par rapport aux autres.

6. Dispositif selon l'une des revendications 1 à 5, **caractérisé en ce que** le laser à semiconducteur pulsé (13) se compose d'une unité comportant une diode laser, un collimateur à trois lentilles et un circuit électronique de pilotage qui émet des impulsions lumineuses ayant une longueur d'onde de 670 nm environ.

7. Dispositif selon l'une des revendications 1 à 6, **caractérisé en ce que** les éléments récepteurs (14 à 17) se composent de photodiodes à couche intrinsèque (PIN) et d'un circuit électronique amplificateur intégré.

8. Dispositif selon l'une des revendications 1 à 7, **caractérisé en ce que** le réflecteur parabolique (11), le miroir tournant (12), le laser semiconducteur (13), les éléments récepteurs (14 à 18) et la photodiode (18) sont logés dans un boîtier compact (21) dont le côté (22) dirigé vers l'objet (1) présente une fente longitudinale (23) recouverte de verre.
